# EUROPEAN PATENT SPECIFICATION

(11) **EP 4 355 484 B1**
(45) Date of publication and mention of the grant of the patent: **08.04.2026**
(21) Application number: 22754194.3
(22) Date of filing: 03.06.2022
(51) Int. Cl.: B01J 31/22

(54) **METHOD TO ACTIVATE CARBENE COMPLEXES AND THEIR USE IN METATHESIS POLYMERIZATION**
VERFAHREN ZUR AKTIVIERUNG VON CARBENKOMPLEXEN UND DEREN VERWENDUNG BEI DER METATHESEPOLYMERISATION
PROCÉDÉ D'ACTIVATION DE COMPLEXES CARBÈNE ET LEUR UTILISATION DANS LA POLYMÉRISATION PAR MÉTATHÈSE

(30) Priority: 15.06.2021 US 202163210696 P
(43) Date of publication of application: 24.04.2024
(73) Proprietor: ExxonMobil Chemical Patents Inc., Baytown, TX 77520 (US)
(72) Inventor: CULCU, Gursu, Humble, TX 77346 (US); KOLB, Rainer, Kingwood, TX 77339 (US); ALLIGER, Glen E., Houston, TX 77059 (US)
(74) Representative: ExxonMobil Petroleum & Chemical BV
(86) International application number: PCT/US2022/032108
(87) International publication number: WO 2022/265865

(56) References cited:
- WO-A1-2020/099750
- US-A- 4 248 738
- BORGUET YANNICK ET AL: "Synthesis and Catalytic Evaluation in Olefin Metathesis of a Second-Generation Homobimetallic Ruthenium-Arene Complex Bearing a Vinylidene Ligand", ORGANOMETALLICS, vol. 30, no. 10, 19 April 2011 (2011-04-19), pages 2730 - 2738, XP055961036, ISSN: 0276-7333, DOI: 10.1021/om2001074
- CHAUVIN, Y. ET AL.: "Catalysis of Olefin Transformation by Tungsten Complexes, 5f. Tungsten Carbonyl Carbenes Activated by Titanium Tetrahalides as Catalysts for the Ring-Opening Polymerization Of Cyclopentene", MAKROMOL. CHEM., vol. 177, no. 9, 1976, pages 2637 - 2646, XP002807535

## Description

### TECHNOLOGICAL FIELD

Exemplary embodiments described herein relate to metathesis reactions catalyzed by Fischer type pre-catalysts.

### BACKGROUND

Fischer carbenes have been used in olefin metathesis and ring opening metathesis for a long time. However, there are limited number of literature reports describing their use particularly in ring-opening metathesis polymerization (ROMP) of cyclic olefins. The main difficulty arises from the fact that the researchers did not have any control over molecular weight and cis/trans ratio of the resulting polymers. In particular, the seminal work by Chauvin (Chauvin, Y. et al. (1976) "Catalysis of Olefin Transformation by Tungsten Complexes, 5†. Tungsten Carbonyl Carbenes Activated by Titanium Tetrahalides as Catalysts for the Ring-Opening Polymerization Of Cyclopentene," Makromol. Chem., v. 177(9), pp. 2637- 2646, hereinafter "Chauvin") showed that the catalyst had to be pre-activated by light or thermal activation in the presence of excess TiCl₄ (150 and more equivalents), making the process expensive and difficult to handle (air and moisture sensitivity of TiCl₄). Moreover, the resulting polymers were always highly trans double bond enriched (80% and more). The Chauvin paper also reported that the reaction works exclusively in aromatic solvents, and did not report the molecular weight of the resulting polymers.

The main driving force for ROMP is the release of ring strain, ROMP is very effective when there is sufficient ring strain. Therefore, among cyclic olefins ROMP of five and six membered cyclic olefins is exceptionally challenging due the low strain energy of the double bond. For example, only one report is known on the ROMP of cyclohexene where the reaction occurred below -20°C to yield very low molecular weight oligomers (Patton, P. A. et al. (1986) "Olefin Metathesis of Cyclohexene," Macromolecules, v.19 (4), pp. 1266-1268).

In general, Grubbs type catalysts lead to lower molecular weight polypentenamer at or above room temperature (at low conversion) limiting its use as a commercial catalyst candidate for a potentially high molecular weight product. On the other hand, both Grubbs and Schrock type catalysts are sensitive towards linear alpha olefins that are present in C₅ feed, resulting in uncontrolled chain transfer events.

### SUMMARY

A method, comprising: contacting a carbene precatalyst with a first co-catalyst, under reaction conditions sufficient to cause the first-co-catalyst to activate the carbene precatalyst, wherein the first co-catalyst is selected from the group consisting of a Br₂-1,4-dioxane complex, I₂, PhICl₂, and PCl₅, as described in the attached claims.

The carbene is selected from the group consisting of:

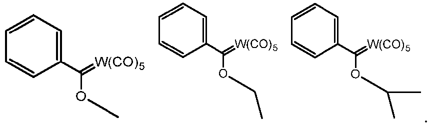

In the method, the contacting can include providing a second co-catalyst, wherein the second co-catalyst is titanium halide, a transition metal halide, or a main group halide in an amount less than or equal to 30 equivalents.

In the method, the contacting can form an activated carbene, and the method can further include: adding a monomer to the activated carbene under polymerization conditions; and extracting a polymer.

In the method, the monomer is cyclopentene and the polymerization conditions cause the cyclopentene be boiling.

In the method, the monomer is a cyclic olefin.

In the method, the polymer has trans double bond content ranging from 10% to 90%.

In the method, the polymer has a Mw from 10 kg/mol to 700 kg/mol.

In the method, the polymerization is performed in a reactor with an atmosphere selected from the group consisting of O₂, Br₂, F₂, Cl₂, air, or a combination thereof.

The method can further include controlling Mw of the polymer using a chain transfer agent.

In the method, the chain transfer agent is a linear alpha olefin.

### DETAILED DESCRIPTION

### Definitions

For the purposes of this application and the claims thereto, the new numbering scheme for the Periodic Table Groups is used as described in CHEMICAL AND ENGINEERING NEWS, v.63(5), pg. 27 (1985). Therefore, a "group 4 metal" is an element from group 4 of the Periodic Table, e.g. Hf, Ti, or Zr.

The term "hydrocarbon" means a class of compounds containing hydrogen bound to carbon, and encompasses (i) saturated hydrocarbon compounds, (ii) unsaturated hydrocarbon compounds, and (iii) mixtures of hydrocarbon compounds (saturated and/or unsaturated), including mixtures of hydrocarbon compounds having different values of n. Likewise, a "Cm-Cy" group or compound refers to a group or compound comprising carbon atoms at a total number thereof in the range from m to y. Thus, a C₁-C₅₀ alkyl group refers to an alkyl group comprising carbon atoms at a total number thereof in the range from 1 to 50.

The terms "hydrocarbyl radical," "hydrocarbyl group," or "hydrocarbyl" may be used interchangeably and are defined to mean a group consisting of hydrogen and carbon atoms only. Preferred hydrocarbyls are C₁-C₁₀₀ radicals that may be linear, branched, or cyclic, and when cyclic, aromatic or non-aromatic. Examples of such radicals include, but are not limited to, alkyl groups such as methyl, ethyl, n-propyl, isopropyl, n-butyl, isobutyl, sec-butyl, tert-butyl, pentyl, iso-amyl, hexyl, octyl cyclopropyl, cyclobutyl, cyclopentyl, cyclohexyl, cyclooctyl, and the like, aryl groups, such as phenyl, benzyl naphthyl, and the like.

Unless otherwise indicated, the term "substituted" means that at least one hydrogen atom has been replaced with at least one non-hydrogen group, such as a hydrocarbyl group, a heteroatom, or a heteroatom containing group, such as halogen (such as Br, Cl, F or I) or at least one functional group such as -NR*₂, -OR*, -SeR*, -TeR*, -PR*₂, -AsR*₂, -SbR*₂, -SR*, -BR*₂, -SiR*₃, -GeR*₃, -SnR*₃, -PbR*₃, -(CH₂)q-SiR*₃, and the like, where q is 1 to 10 and each R* is independently hydrogen, a hydrocarbyl or halocarbyl radical, and two or more R* may join together to form a substituted or unsubstituted completely saturated, partially unsaturated, or aromatic cyclic or polycyclic ring structure), or where at least one heteroatom has been inserted within a hydrocarbyl ring.

The term "substituted hydrocarbyl" means a hydrocarbyl radical in which at least one hydrogen atom of the hydrocarbyl radical has been substituted with at least one heteroatom (such as halogen, e.g., Br, Cl, F or I) or heteroatom-containing group (such as a functional group, e.g., -NR*₂, -OR*, -SeR*, -TeR*, -PR*₂, -AsR*₂, -SbR*₂, -SR*, -BR*₂, -SiR*₃, -GeR*₃, -SnR*₃, -PbR*₃, -(CH₂)q-SiR*₃, and the like, where q is 1 to 10 and each R* is independently hydrogen, a hydrocarbyl or halocarbyl radical, and two or more R* may join together to form a substituted or unsubstituted completely saturated, partially unsaturated, or aromatic cyclic or polycyclic ring structure), or where at least one heteroatom has been inserted within a hydrocarbyl ring.

The term "substituted phenyl," means a phenyl group having 1 or more hydrogen groups replaced by a hydrocarbyl, substituted hydrocarbyl, heteroatom or heteroatom containing group.

The terms "alkyl radical," and "alkyl" are used interchangeably throughout this disclosure. For purposes of this disclosure, "alkyl radical" is defined to be a saturated hydrocarbon radical that may be linear, branched, or cyclic. Examples of such radicals can include C₁-C₁₀₀ saturated hydrocarbon radicals (C₁-C₁₀₀ alkyls), such as methyl, ethyl, n-propyl, isopropyl, n-butyl, isobutyl, sec-butyl, tert-butyl, pentyl, iso-amyl, hexyl, octyl cyclopropyl, cyclobutyl, cyclopentyl, cyclohexyl, cyclooctyl, and the like including their substituted analogues. Substituted alkyl radicals are radicals in which at least one hydrogen atom of the alkyl radical has been substituted with at least a non-hydrogen group, such as a hydrocarbyl group, a heteroatom, or a heteroatom containing group, such as halogen (such as Br, Cl, F or I) or at least one functional group such as -NR*₂, -OR*, -SeR*, -TeR*, -PR*₂, -AsR*₂, -SbR*₂, -SR*, -BR*₂, -SiR*₃, -GeR*₃, -SnR*₃, -PbR*₃, -(CH₂)q-SiR*₃, and the like, where q is 1 to 10 and each R* is independently hydrogen, a hydrocarbyl or halocarbyl radical, and two or more R* may join together to form a substituted or unsubstituted completely saturated, partially unsaturated, or aromatic cyclic or polycyclic ring structure), or where at least one heteroatom has been inserted within a hydrocarbyl ring.

As used herein, and unless otherwise specified, the term "aromatic" refers to unsaturated heterocycles, or unsaturated cyclic hydrocarbons having a delocalized conjugated π system. Typical aromatics comprise 5 to 20 carbon atoms (aromatic C₅-C₂₀ hydrocarbon), particularly from 5 to 12 carbon atoms (aromatic C₅-C₁₂ hydrocarbon), and particularly from 5 to 10 carbon atoms (aromatic C₅-C₁₂ hydrocarbon). Exemplary aromatics include, but are not limited to benzene, toluene, xylenes, mesitylene, ethylbenzenes, cumene, naphthalene, methylnaphthalene, dimethylnaphthalenes, ethylnaphthalenes, acenaphthalene, anthracene, phenanthrene, tetraphene, naphthacene, benzanthracenes, fluoranthrene, pyrene, chrysene, triphenylene, and the like, and combinations thereof.

As used herein, Mn is number average molecular weight, Mw is weight average molecular weight, and Mz is z average molecular weight, wt% is weight percent, and mol% is mole percent. Molecular weight distribution (MWD), also referred to as polydispersity index (PDI), is defined to be Mw divided by Mn. Unless otherwise noted, all molecular weight units (e.g., Mw, Mn, Mz) are g/mol (g mol⁻¹).

Unless otherwise indicated, as used herein, "high molecular weight" is defined as a number average molecular weight (Mn) value of 100,000 g/mol or more. "Low molecular weight" is defined as an Mn value of less than 100,000 g/mol.

Room temperature is 23°C unless otherwise indicated.

Air refers to the air we breathe.

### Description

Exemplary embodiments of the present technological advancement provide new, less expensive, and easier to handle conditions to control ROMP of cyclic olefins. Moreover, the embodiments described below explore whether the reactions can be run in hydrocarbon solvents, such as pentane, hexane, etc., or even in a neat monomer such as cyclopentene.

Representation of ROMP of a series of cyclic olefins and cyclopentene

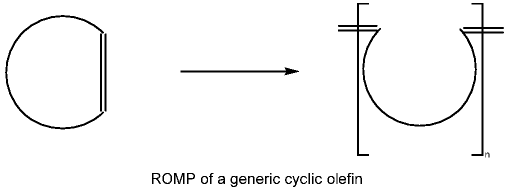

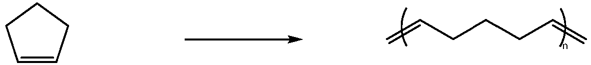

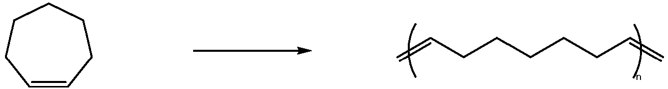

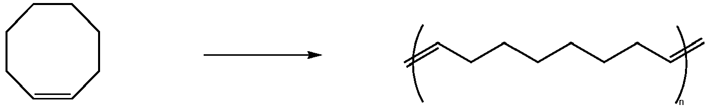

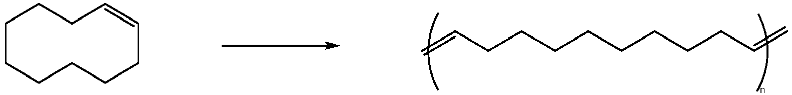

Although the properties of polypentenamer (particularly trans polypentenamer) are very well studied and known, there is still a need for a well-defined catalyst that can achieve high conversion with low loading at or above room temperature to yield especially high molecular weight polypentenamer. Fischer carbenes, in general, are particularly attractive due to their straightforward high yield synthesis (2 steps) from simple and commercially available inexpensive starting materials, hydrocarbon solubility, and their stability towards water and air. Therefore, attempts were made to reproduce the results reported in Chauvin's paper and to explore whether any opportunities exist to improve the catalysis (i.e., Mw and cis/trans control, shorter reaction times, minimizing the use of excess TiCl₄ etc.).

Multiple attempts made to reproduce the Chauvin results resulted with a high trans ratio of 85% only once at a very low yield. It should be noted that although Chauvin claims "specific treatment in order to reach the best activity", the experimental details of the publication is poor (possibly due to the in accurate equipment used in 1976). The observations during experimentation however warranted follow up studies since the reaction (for TiCl₄ case) seemed to be reaching high conversion within minutes to produce mostly mid and high cis content. The nature of the activation under thermal or light activated conditions also intrigued interest on whether this period prior to the polymerization reaction could be skipped or shortened. The use of aromatic solvents and high Ti content are also not desirable since these solvents are not desired in industry and deashing would certainly be necessary to remove excess Ti making the process even more costly. Therefore, conditions were explored without pre-activation time while using solvents such as pentane, hexane or neat cyclopentene where excess TiCl₄ was not necessary.

Embodiments of the present technological advancement have shown: that 30 equivalent TiCl₄ is enough to initiate polymerization under ambient light (i.e., no need for thermal or photo activation by a UV light source prior to the reaction); by using a co-catalyst, such as I₂, PHlCl₂, PCl₅, the use of TiCl₄ can be eliminated or reduced to 1-30 equivalents; TiCl₄ can be replaced with other titanium halides, transition metal halides, and/or main group halides; the reaction can be run in air, the reaction can be run at higher temperatures (such as 55°C or greater, or with boiling cyclopentene); and the reaction can yield polymers having molecular trans content measured by ¹³C NMR spectroscopy from 10% to 90%, and more preferably from 22% to 80%.

The present technological advancement uses a carbene complex, which is illustrated below. For purposes of this application a Fischer carbene and a Casey Carbene are generically referred to as a carbene, wherein they comprise a non-persistent carbene having a pi-donor substituents. These carbenes, in some contexts, are considered to be inactive, but the present technological advancement shows that they can be activated without thermal or photo activation by a UV light prior to the reaction.

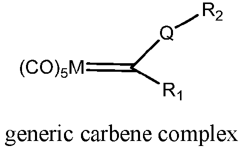

### Selected Examples

Table 1 provides data regarding the three noted Fischer carbenes with cyclopentene as the monomer. The Fischer carbenes used in this report were synthesized according to previously reported methods in the following literature documents (Villemin, D. "An Undergraduate Experiment in Homogeneous Catalysis: Synthesis of Phenylethoxycarbene Tungsten Pentacarbonyl and Polymerization of Norbornene and Phenylacetylene," J. Chem. Educ. 1987, v.64(2), pg. 183 and "Alkylation of Acylmetalates with Alkyl Halides to Prepare Fischer Carbene Complexes: An Improved Protocol," Tetrahedron 2011, v.67(1), pp. 106-113). Cyclopentene was sparged with N₂ prior to use, passed through basic alumina and stored over 3 Angstrom molecular sieves. The cis/trans ratio was determined by ¹³C NMR spectroscopy.

Fischer carbenes used to generate Table 1 are the following.

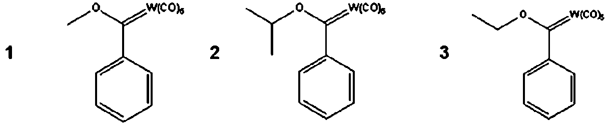

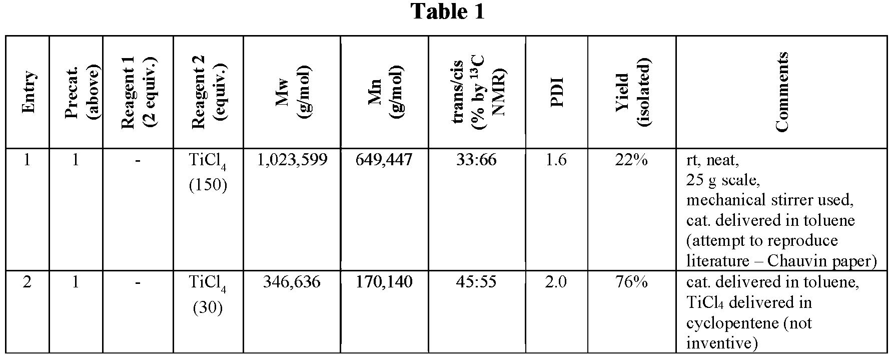

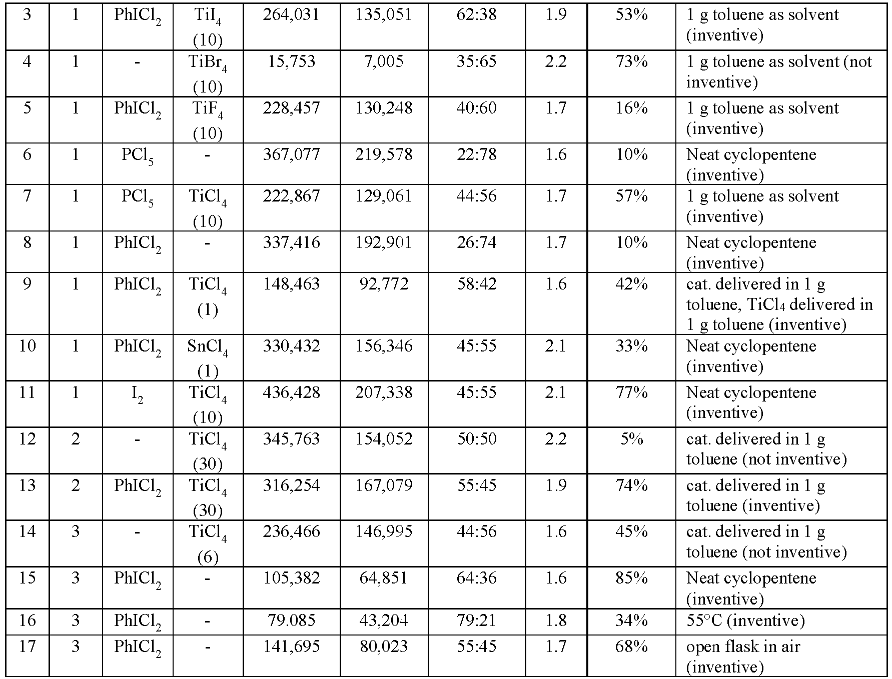

Based on the Chauvin's and other limited reports, it was understood that the Fischer carbene complex needs to be oxidized to access the catalytically active species. This was achieved thermally or by light in the reported literature. The present inventors have found that external oxidants or halide sources such as oxygen, Cl₂, Br₂, I₂ etc. promote the same effect. Indeed, it can be seen in Table 1 and Table 2 that these type of oxidants were able to initiate the reaction without any extra light source or thermal activation in the absence of TiCl₄.

The Chauvin paper reported that *during the pre-activation* the Ti to W ratio can be as low as 40 (extra 90 equivalents added later), but the conversion drops to 27%. Results here show that depending on the co-catalyst, the stoichiometry of Ti can be as low as *one.* While Chauvin declares that TiI₄ gave poor results, the present technological advancement was able to obtain up to 75% isolated yield using only 10 equiv. TiI₄ or TiBr₄. The success of using different Ti halides warrants the question whether titanium is the only metal source that can be used as the co-catalyst. It was demonstrated that SnCl₄ or PCl₅ can facilitate the reaction up to 33% isolated yield. In fact, it is clear from the present results that no metal halide is even needed if one uses an oxidant such as PhICl₂, I₂, Br₂(dioxane), PCl₅. However, the results indicate that further optimization is needed for the desired trans/cis ratio and Mw.

Finally, it has been shown that the reaction proceeds above room temperature (entry 16) essentially in boiling cyclopentene to yield lower Mw polypentenamer in 34% isolated yield. The reaction can also take place in an open flask in a fume hood in air (entry 17).

Table 2 shows multi gram scale experiments using pre-catalyst 1 (shown above) and mechanical stirrer.

**Table 2**

| ***Entry*** | ***co-cat-1*** | ***co-cat-2*** | ***Mw*** | ***Mn*** | ***kg polymer* / *g W*** | ***trans*/*cis*** | ***Comments*** |
|---|---|---|---|---|---|---|---|
| 1 | Br₂(dioxane) | TiCl₄ (30) | 585,885 | 228,521 | 0.58 | 22/78 | neat, rt, 30 min (inventive) |
| 2 | PhICl₂ | TiCl₄(30) | 537,061 | 209,996 | 1.0 | 24/76 | neat, rt, 30 min (inventive) |
| 3 | PhICl₂ | Til₄ (10) | 529,600 | 378,559 | 0.96 | 43/57 | neat, rt, 30 min (inventive) |
| 4 | I₂ | TiCl₄(10) | 347,121 | 222,678 | 0.72 | 31/69 | neat, rt, 30 min (inventive) |
| 5 | I₂ | TiCl₄(1) | 403,293 | 253,123 | 0.59 | 35/65 | neat, rt, 30 min (inventive) |
| *6* | *PhICl₂* | *NONE* | *256,513* | *122,461* | *0.47* | *40*/*60* | *55°C, toluene, 30 min (inventive - industrially useful example)* |
| 7 | I₂ | TiCl₄ (30) | 156,402 | 98,429 | 1.1 | 52/48 | neat, 55°C (220 g isolated polymer) (inventive - industrially useful example) |

Tungsten-carbyne complexes are related to the Fischer carbenes in a way that they can be generated directly from a Fischer carbene by its reaction with BX₃ (X = I, Br, Cl). However, contrary to the carbenes, they are much less stable thermally, and more sensitive towards moisture and air. They were also reported to perform ROMP of cyclic olefins including cyclopentene if initiated by a suitable activator. A polymerization screening was conducted using Br(CO)₄WCPh to obtain data as shown in Table 3 (not according to the invention).

**Table 3**

| **Entry** | **co-cat-2** | **Mw** | **Mn** | **trans/cis** | **PDI** | **Info.** |
|---|---|---|---|---|---|---|
| 1 | TiCl₄ | NA | NA | NA | NA | DCM, 0°C, N₂ atmosphere No polymer observed |
| 2 | I₂ | 216,032 | 99,951 | 41/59 | 2.16 | neat, N₂ atmosphere, rt |
| 3 | NONE | 271,289 | 136,324 | 35/65 | 1.99 | Open flask, fume hood, rt |
| 4 | I₂ | 325,363 | 168,875 | 30/70 | 1.93 | Mechanical stirrer, neat, N₂ atmosphere, rt 17.5 g polymer isolated (0.87 kg polymer/ gW) |

The results using the carbyne complex indicate that similar activation (*i.e.* oxidation) methods can be used to rapidly access the presumably active species and the reaction can be performed even in air without the need of an oxidant since air is the oxidant.

### General cyclopentene polymerization experiments using Fischer carbene

Experiment A (when TiX₄ (X = F, Cl, Br, I) is used): The tungsten complex was dissolved in neat cyclopentene or in a combination of suitable solvent and cyclopentene (when solvent is used). TiX₄ in a suitable solvent (such as hexane or pentane) or as a solid (for solid titanium halides) was added to the solution. The solution was then stirred for up to 3 minutes. The reagent (such as PhICl₂, I₂, Br₂(dioxane), PCl₅, SnCl₄) was added to the solution. After a specific time, the solution was quenched by pouring onto an alcohol such as methanol, ethanol or isopropanol. The solvent, unreacted monomer and alcohol was decanted away from the precipitated polymer and the isolated polymer isolated was dried in a vacuum oven or under an atmosphere of nitrogen or argon purge. Alternatively, the reaction can be quenched with an aldehyde containing solution such as benzaldehyde or para-dimethylamino benzaldehyde in chloroform or dichloromethane.

### Discussion of Experimental Examples

*Example - Table 1 Entry 1* (not according to the invention): A polymerization reaction was conducted, as shown in Table 1, Entry 1, by replication of the conditions reported in the publication by Chauvin. Contrary to the report, the present inventors isolated a polymer with significant cis content in low yield.

### Example - Table 1 Entry 2: (not according to the invention)

Fischer carbene (30 mg) was dissolved in 1 m toluene and left stirring at room temperature. TiCl₄ (384 mg) in neat cyclopentene (3 g) was added. Instant viscosity change was observe and the reaction was quenched with paradimethylaminobenzaldehyde containing DCM solution. Washed with EtOH and water. The isolated polymer was dried under an Argon atmosphere.

*Example - Table 1 Entry 3:* Fischer carbene (10 mg), TiI₄ (125 mg) and cyclopentene (1.53 g) were combined. 1 g toluene was added. Stirred for a minute at room temperature (not all TiI₄ was dissolved). PhICl₂ (12 mg) was added and instant viscosity change was observed. The solution was quenched with paradimethylaminobenzaldehyde containing DCM solution. Washed with EtOH and water. Dried under N₂.

### Example - Table 1 Entry 4: (not according to the invention)

Fischer carbene (10 mg) and cyclopentene (1.53 g) were combined. 1 g toluene was added. Stirred for a minute. TiBr₄ (82 mg) was added and instant viscosity change was observed. The solution was quenched with paradimethylaminobenzaldehyde containing DCM solution. Washed with EtOH and water. Dried under N₂.

*Example - Table 1 Entry 5:* Fischer carbene (10 mg), TiF₄ (28 mg) and cyclopentene (1.53 g) was combined. 1 g toluene was added. Stirred for a minute (not all TiF₄ was dissolved). PhICl₂ (12 mg) was added and instant viscosity change was observed. The solution was quenched with paradimethylaminobenzaldehyde containing DCM solution. Washed with EtOH and water. Dried under N₂.

*Example - Table 1 Entry 6:* Fischer carbene (10 mg) was dissolved in cyclopentene (2.07 g) at rt. PCl₅ (19 mg) was added. Viscosity changes slowly. After 10 minutes the reaction stopped. Quenched with paradimethylaminobenzaldehyde containing DCM solution. Washed with EtOH and water. Dried under N₂.

*Example - Table 1 Entry* 7: Fischer carbene (10 mg) and TiCl₄ (43 mg) were dissolved in 1 g toluene at rt. PCl₅ (19 mg) was added. Stirred for a minute. Cyclopentene (2.47 g) was added. Viscosity changes slowly. After 10 minutes the reaction stopped. Quenched with paradimethylaminobenzaldehyde containing DCM solution. Washed with EtOH and water. Dried under N₂.

*Example - Table 1 Entry 8:* Fischer carbene (30 mg) was dissolved in cyclopentene (3 g). PhICl₂ (38 mg) was added as solid. Instant polymerization observed. The solution was quenched with paradimethylaminobenzaldehyde containing DCM. Washed with EtOH. Dried under N₂.

*Example - Table 1 Entry 9:* TiCl₄ (128 mg) was dissolved in 1 mL toluene at room temperature. Catalyst (30 mg) in 1 mL toluene was added. Stirred for a minute. Cyclopentene (3 g) was added. PhICl₂ (37 mg) was added as solid. Instant viscosity change observed and stopped stirring. The solution was quenched with paradimethylaminobenzaldehyde containing DCM solution. Washed with EtOH and water. Dried under N₂.

*Example - Table 1 Entry 10:* Fischer carbene (30 mg) and SnCl₄ (18 mg) was combined in cyclopentene (3 g). Kept stirring at room temperature for 2 minutes. No viscosity change observed. PhICl₂ was added as solid. Instantly stopped. The solution was quenched with paradimethylaminobenzaldehyde containing DCM solution. The polymer was isolated and washed with EtOH and water. Dried under Argon.

*Example - Table 1 Entry 11:* Fischer carbene (10 mg) was dissolved in cyclopentene (2.15 g). Iodine (11 mg) was added. Stirred until it dissolved. No viscosity change observed. TiCl₄ (43 mg) was added. Instant viscosity change lead to a complete stop. The solution was quenched with paradimethylaminobenzaldehyde containing DCM solution. Poured onto EtOH and water. Washed and dried under N₂.

### Example - Table 1 Entry 12 (not according to the invention):

Fischer carbene (10 mg) was dissolved in 1 g toluene at room temperature. Cyclopentene (1 g) was added. TiCl₄ (121 mg) was added and left at room temperature. Very little viscosity change was observed. One hour later the solution was quenched with Quenched with paradimethlaminobenzaldehyde containing DCM solution. Washed with EtOH and water. Dried under N₂.

*Example - Table 1 Entry 13:* Fischer carbene (10 mg) was dissolved in 1 g toluene at rt. Cyclopentene (1 g) was added. TiCl₄ (121 mg) was added. PhICl₂ (12 mg) was added. Rapid viscosity change in 30 minutes. The solution was quenched with quenched with paradimethlaminobenzaldehyde containing DCM solution. Washed with EtOH and water. Dried under N₂.

### Example - Table 1 Entry 14: (not according to the invention)

Fischer carbene (15 mg) in 1 g toluene was added to TiCl₄ (37 mg) at room temperature. Left stirring for one minute. Cyclopentene (2.45 g) was added. Instant viscosity change observed. The solution was quenched with quenched with paradimethlaminobenzaldehyde containing DCM solution. Washed with EtOH and water. Dried under N₂.

*Example - Table 1 Entry 15:* Fischer carbene (15 mg) in cyclopentene (1.46 g) stirred at room temperature for one minute. PhICl₂ (18 mg) was added. Instant viscosity change. The reaction was stopped. The solution was quenched with paradimethlaminobenzaldehyde containing DCM solution. Washed with EtOH and water. Dried under N₂.

*Example - Table 1 Entry 16:* Fischer carbene (10 mg) in 4 g toluene stirred at 55°C. Cyclopentene (1.78 g) was added. Stirred for 30 seconds. PhICl₂ (12 mg) was added. Instant viscosity change. Five minutes later the solution was quenched and washed with water and EtOH. The polymer was dried in a vacuum oven.

*Example - Table 1 Entry 17:* Fischer carbene (10 mg) in neat cyclopentene (2.23 g) was left stirring at room temperature in an open flask. PhICl₂ (12 mg) was added. Instant viscosity change was observed. The solution was quenched and washed with water and EtOH. The polymer was dried under N₂.

*Example - Table 2 Entry 1:* Fischer carbene (10 mg) was dissolved in cyclopentene (77 g). TiCl₄ (128 mg) in hexane (2 mL) was added. Stirred for 30 seconds. Br₂(dioxane) (11 mg) was added as solid. Left at room temperature. Forty minutes later, it was quenched with paradimethylaminobenzaldehyde containing DCM solution and poured onto iPrOH. Washed. Dried under N₂.

*Example - Table 2 Entry 2:* Fischer carbene (10 mg) was dissolved in cyclopentene (77 g). TiCl₄ (128 mg) in hexane (2 mL) was added. Stirred for 30 seconds. PhICl₂ (12 mg) was added as solid. Left at room temperature. One hour later, it was quenched with paradimethylaminobenzaldehyde containing DCM solution and poured onto iPrOH. Washed. Dried under N₂.

*Example - Table 2 Entry 3:* Fischer carbene (10 mg), TiI₄ (125 mg) and cyclopentene (77 g) was combined. 1 g toluene was added. Stirred for a minute (not all TiI₄ was dissolved). PhICl₂ (124 mg) was added and instant viscosity change was observed. Quenched with paradimethylaminobenzaldehyde containing DCM solution after 20 minutes. Washed with iPrOH and water. Dried under N₂.

*Example - Table 2 Entry 4:* Fischer carbene (50 mg) was dissolved in cyclopentene (77 g). TiCl₄ (214 mg) in 2 mL hexane was added. Stirred for 30 seconds. Iodine (57 mg) was added. Thirty minutes later poured onto iPrOH (200 mL) and water. Washed and dried in vacuum oven.

*Example - Table 2 Entry 5:* Fischer carbene (50 mg) was dissolved in cyclopentene (38 g). TiCl₄ (21 mg) in 2 mL hexane was added. Stirred for 30 seconds. Iodine (57 mg) was added. Thirty minutes later poured onto iPrOH and water. Washed and dried in vacuum oven.

*Example - Table 2 Entry 6:* Fischer carbene (16 mg) in 100 mL toluene stirred at 55°C. Cyclopentene (74 g) was added. Stirred for a minute. PhICl₂ (19 mg) was added. Thirty minutes later quenched and washed with isopropanol. The precipitated white polymer was dried under N₂.

*Example - Table 2 Entry* 7: Fischer carbene (500 mg) was dissolved in cyclopentene (384 g). TiCl₄ (6.41 g) in 2 mL hexane was added. Stirred for 30 seconds. Iodine (572 mg) was added. Thirty minutes later poured onto iPrOH and water. Washed and dried in vacuum oven.

### Example - Table 3 Entry 2: (not according to the invention)

Catalyst (20 mg) was dissolved in cyclopentene (2.93 g) and kept stirring at room temperature. Iodine (11 mg) was added as solid. Viscosity change observed. 10 minutes later stopped, washed with MeOH. Dried.

### Example - Table 3 Entry 3: (not according to the invention)

Catalyst (20 mg) was dissolved in cyclopentene (2.93 g) and kept stirring at room temperature in an open flask in fume hood. Iodine (11 mg) was added as solid. Viscosity change observed. Ten minutes later stopped, washed with MeOH. Dried.

### Example - Table 3 Entry 4: (not according to the invention)

Catalyst (50 mg) was dissolved in cyclopentene (110 g) and kept stirring at room temperature. Iodine (27 mg) was added as solid. Viscosity change observed. Thirty minutes later stopped, washed with MeOH. Dried.

### Activation of Carbene or Carbyne (Carbyne is not according to the invention)

An exemplary embodiment of the present technological advancement can include contacting a carbene or carbyne precatalyst with a first co-catalyst, under reaction conditions sufficient to activate the carbene or carbyne precatalyst. Rather than use thermal or photo activation, the present technological advancement can activate the carbene or carbyne with one or more co-catalysts. The first co-catalyst can be selected from the group consisting of Br₂-1,4-dioxane complex, I₂, PhICl₂, and PCl₅.

Also disclosed herein are examples of an aluminum activator that could be used with the present technological advancement. (not according to the invention). It is also disclosed that alumoxane can be utilized as an activator in the catalyst system. Alumoxanes are generally oligomeric compounds containing -Al(R¹)-O- sub-units, where R¹ is an alkyl group. Examples of alumoxanes include methylalumoxane (MAO), modified methylalumoxane (MMAO), ethylalumoxane and isobutylalumoxane. Alkylalumoxanes and modified alkylalumoxanes are suitable as catalyst activators, particularly when the abstractable ligand is an alkyl, halide, alkoxide or amide. Mixtures of different alumoxanes and modified alumoxanes may also be used. It may be suitable to use a visually clear methylalumoxane. A cloudy or gelled alumoxane can be filtered to produce a clear solution or clear alumoxane can be decanted from the cloudy solution. A useful alumoxane is a modified methyl alumoxane (MMAO) cocatalyst type 3A (commercially available from Akzo Chemicals, Inc. under the trade name Modified Methylalumoxane type 3A, covered under US 5,041,584). Another useful alumoxane is solid polymethylaluminoxane as described in US Pat. Nos. 9,340,630; 8,404,880; and 8,975,209. Aluminum alkyls are available as hydrocarbon solutions from commercial sources. Methylalumoxane ("MAO") is available from Albemarle as a 30 wt% solution in toluene.

Preferably, a second co-catalyst is not needed, which advantageously lowers the cost of implementing the present technological advancement. However, as shown in Table 1, second co-catalysts can be used. Advantageously, when optionally using TiCl₄ or other titanium halides or transition metal halides or main group halides, the amount thereof can be less than 30 equivalents, or 30 to 1 equivalents, or less than 10 equivalents, or 10 to 1 equivalents.

### Polymerization Processes

In embodiments herein, the present technological advancement relates to polymerization processes where monomer (such as cyclopentene), and optionally comonomer, are contacted with a catalyst system comprising co-catalyst (or activator) and at least one catalyst or pre-catalyst compound, as described above. The catalyst compound and activator may be combined in any order, and are combined typically prior to contacting with the monomer.

An exemplary polymerization process can include adding a monomer to the activated carbene under polymerization conditions; and extracting a polymer. Those of ordinary skill in the art, in light of the teaching of the present application, will be able to implement polymerization conditions to achieve the results described herein without undue experimentation.

The monomer used in the polymerization reaction can include cyclopentene and the polymerization conditions can be such that the cyclopentene be boiling. In other words, the reaction temperature can be at or above 55°C. The monomer can also be a cyclic olefin, preferably cyclopentene. The present technological advancement can be used to ROMP other monomers, such as cyclooctene.

The polymer generated with the present technological advancement can have trans double bond content ranging from 10% to 90%, preferably 22% to 80%.

The polymer generated with the present technological advancement can have a Mw from 10 kg/mol to 1,000 kg/mo, or 0.70 kg/mol to 700 kg/mol.

The present technological advancement can further include controlling Mw of the polymer using chain transfer agents, such as linear alpha olefins including ethylene (1-butene, 1-pentene, 1-hexene etc.).

The polymerization can be performed in a reactor with an atmosphere selected from the group consisting of O₂, Br₂, F₂, Cl₂, air, or a combination thereof.

While the embodiments and experiments described herein used cyclopentene as the monomer, the present technological advancement can be used with other monomers and/or comonomers. Exemplary C₂ to C₄₀ olefin monomers and optional comonomers include ethylene, propylene, butene, pentene, hexene, heptene, octene, nonene, decene, undecene, dodecene, norbornene, norbornadiene, dicyclopentadiene, cyclopentene, cycloheptene, cyclooctene, cyclooctadiene, cyclododecene, 7-oxanorbornene, 7-oxanorbomadiene, substituted derivatives thereof, and isomers thereof, preferably hexene, heptene, octene, nonene, decene, dodecene, cyclooctene, 1,5-cyclooctadiene, 1-hydroxy-4-cyclooctene, 1-acetoxy-4-cyclooctene, 5-methylcyclopentene, cyclopentene, dicyclopentadiene, norbornene, norbornadiene, and their respective homologs and derivatives, preferably norbornene, norbornadiene, and dicyclopentadiene.

The term "comprising" is considered synonymous with the term "including." Likewise whenever a composition, an element or a group of elements is preceded with the transitional phrase "comprising", it is understood that we also contemplate the same composition or group of elements with transitional phrases "consisting essentially of," "consisting of", "selected from the group of consisting of," or "is" preceding the recitation of the composition, element, or elements and vice versa.

When numerical lower limits and numerical upper limits are listed herein, ranges from any lower limit to any upper limit are contemplated.

## Claims

1. A method, comprising:
contacting a carbene precatalyst, the carbene being selected from the group consisting of 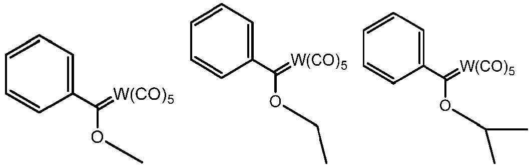
with a first co-catalyst, under reaction conditions sufficient to cause the first-co-catalyst to activate the carbene precatalyst, wherein the first co-catalyst is selected from the group consisting of a Br₂-1,4-dioxane complex, I₂, PhICl₂, and PCl₅.

2. The method of claim 1, wherein the contacting includes providing a second co-catalyst, wherein the second co-catalyst is titanium halide, a transition metal halide, or a main group halide in an amount less than or equal to 30 equivalents.

3. The method of any preceding claim, wherein the contacting forms an activated carbene, and the method further comprises:
adding a monomer to the activated carbene under polymerization conditions; and
extracting a polymer.

4. The method of claim 3, wherein the monomer is cyclopentene and the polymerization conditions cause the cyclopentene to be boiling.

5. The method of claim 3, wherein the monomer is a cyclic olefin, preferably cyclopentene.

6. The method of claim 3, wherein the polymer has trans double bond content ranging from 10% to 90%.

7. The method of claim 3, wherein the polymer has a Mw from 10 kg/mol to 700 kg/mol.

8. The method of claim 3, wherein the polymerization is performed in a reactor with an atmosphere selected from the group consisting of O₂, Br₂, F₂, Cl₂, air, or a combination thereof.

9. The method of claim 5, further comprising controlling Mw of the polymer using a chain transfer agent, preferably the chain transfer agent is a linear alpha olefin.

## Patentansprüche

1. Verfahren, umfassend:
Inkontaktbringen eines Carben-Prekatalysators, wobei das Carben ausgewählt ist aus der Gruppe bestehend aus 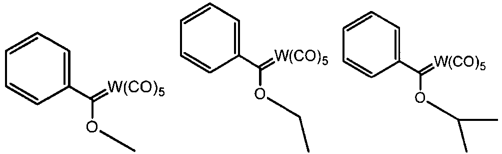 mit einem ersten Co-Katalysator unter Reaktionsbedingungen, die ausreichend sind, dass der erste Co-Katalysator den Carben-Prekatalysator aktiviert, wobei der erste Co-Katalysator ausgewählt ist aus der Gruppe bestehend aus Br₂-1,4-Dioxan-Komplex, I₂, PhICl₂ und PCl₅.

2. Verfahren nach Anspruch 1, wobei das Inkontaktbringen die Bereitstellung eines zweiten Co-Katalysators umfasst, wobei der zweite Co-Katalysator Titanhalogenid, ein Übergangsmetallhalogenid oder ein Hauptgruppenhalogenid in Mengen von weniger als oder gleich 30 Äquivalenten ist.

3. Verfahren nach einem der vorhergehenden Ansprüche, wobei durch das Inkontaktbringen ein aktiviertes Carben gebildet wird und bei dem weiterhin,
Monomer zu dem aktivierten Carben unter Polymerisationsbedingungen hinzugefügt wird; und
Polymer extrahiert wird.

4. Verfahren nach Anspruch 3, wobei das Monomer Cyclopenten ist und unter den Polymerisationsbedingungen das Cyclopenten siedet.

5. Verfahren nach Anspruch 3, wobei das Monomer ein cyclisches Olefin, vorzugsweise Cyclopenten, ist.

6. Verfahren nach Anspruch 3, wobei das Polymer einen Trans-Doppelbindungsgehalt von 10 % bis 90 % aufweist.

7. Verfahren nach Anspruch 3, wobei das Polymer ein Molekulargewicht (Mw) von 10 kg/mol bis 700 kg/mol aufweist.

8. Verfahren nach Anspruch 3, wobei die Polymerisation in einem Reaktor mit einer Atmosphäre durchgeführt wird, die ausgewählt ist aus der Gruppe bestehend aus O₂, Br₂, F₂, Cl₂, Luft oder einer Kombination davon.

9. Verfahren nach Anspruch 5, das weiterhin das Steuern des Molekulargewichts des Polymers unter Verwendung eines Kettenübertragungsmittels umfasst, wobei das Kettenübertragungsmittel vorzugsweise ein lineares alpha-Olefin ist.

## Revendications

1. Procédé, comprenant :
la mise en contact d'un précatalyseur de carbène, le carbène étant choisi dans le groupe constitué par 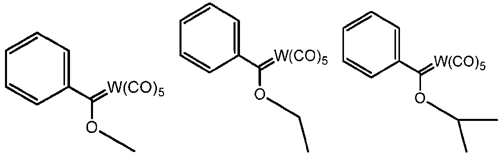
avec un premier co-catalyseur, dans des conditions de réaction suffisantes pour amener le premier co-catalyseur à activer le précatalyseur de carbène, le premier co-catalyseur étant choisi dans le groupe constitué par un complexe Br₂-1,4-dioxane, I₂, PhICl₂ et PCl₅.

2. Procédé selon la revendication 1, dans lequel la mise en contact comprend la fourniture d'un second co-catalyseur, dans lequel le second co-catalyseur est un halogénure de titane, un halogénure de métal de transition ou un halogénure du groupe principal en une quantité inférieure ou égale à 30 équivalents.

3. Procédé selon l'une quelconque des revendications précédentes, dans lequel la mise en contact forme un carbène activé, et le procédé comprend en outre :
l'ajout d'un monomère au carbène activé dans des conditions de polymérisation ; et
l'extraction d'un polymère.

4. Procédé selon la revendication 3, dans lequel le monomère est le cyclopentène et les conditions de polymérisation provoquent l'ébullition du cyclopentène.

5. Procédé selon la revendication 3, dans lequel le monomère est une oléfine cyclique, de préférence le cyclopentène.

6. Procédé selon la revendication 3, dans lequel le polymère a une teneur en double liaison trans allant de 10 % à 90 %.

7. Procédé selon la revendication 3, dans lequel le polymère a un Mw de 10 kg/mol à 700 kg/mol.

8. Procédé selon la revendication 3, dans lequel la polymérisation est effectuée dans un réacteur avec une atmosphère choisie dans le groupe constitué par O₂, Br₂, F₂, Cl₂, air, ou une combinaison de ceux-ci.

9. Procédé selon la revendication 5, comprenant en outre la régulation du Mw du polymère en utilisant un agent de transfert de chaîne, de préférence l'agent de transfert de chaîne est une alpha-oléfine linéaire.
